# EUROPÄISCHE PATENTSCHRIFT

(11) **EP 2 812 166 B1**
(45) Veröffentlichungstag und Bekanntmachung des Hinweises auf die Patenterteilung: **06.06.2018**
(21) Anmeldenummer: 13704751.0
(22) Anmeldetag: 06.02.2013
(51) Int. Cl.: B27D 5/00, B23K 26/073, B29C 63/00

(54) **OPTIMIERUNG DER AKTIVIERUNG VON HAFTMTITTELN DURCH LASERSTRAHLUNG**
OPTIMISATION OF THE ACTIVATION OF ADHESIVE AGENTS BY LASER RADIATION
OPTIMISATION DE L'ACTIVATION D'ADHÉSIFS PAR RAYONNEMENT LASER

(30) Priorität: 10.02.2012 DE 102012202020
(43) Veröffentlichungstag der Anmeldung: 17.12.2014
(73) Patentinhaber: HOMAG GmbH, 72296 Schopfloch (DE)
(72) Erfinder: PETRAK, Axel, 72202 Nagold-Iselshausen (DE)
(74) Vertreter: Hoffmann Eitle
(86) Internationale Anmeldenummer: PCT/EP2013/052290
(87) Internationale Veröffentlichungsnummer: WO 2013/117571

(56) Entgegenhaltungen:
- EP-A1- 2 239 086
- DE-A1- 3 827 297
- DE-A1-102006 056 010
- US-A- 3 560 291
- US-A- 3 790 744
- US-A1- 2009 114 630
- ELIZABETH AZHIKANNICKAL ET AL: "Use of thermal imaging to characterize laser light reflection from thermoplastics as a function of thickness, laser incidence angle and surface roughness", OPTICS & LASER TECHNOLOGY, Bd. 44, Nr. 5, 9. Januar 2012 (2012-01-09) , Seiten 1491-1496, XP055063270, ISSN: 0030-3992, DOI: 10.1016/j.optlastec.2011.12.013

## Beschreibung

### Technisches Gebiet

Die vorliegende Erfindung betrifft Verfahren, mit denen beispielsweise Schmalflächen von bevorzugten plattenförmigen Werkstücken mit einem Beschichtungsmaterial versehen werden können. In diesem Bereich sind zur Aktivierung des bereits auf dem Beschichtungsmaterial bzw. auf dem Werkstück vorgesehenen Haftmittels Lasereinrichtungen bekannt.

### Stand der Technik

Als Stand der Technik ist beispielsweise die DE 10 2006 056 010 A1 nennen. Dieses Dokument offenbart ein Verfahren zur Beschichtung von Bauteilen aus Holz, Holzwerkstoffen, Kunststoff oder dergleichen gemäß dem Oberbegriff des Anspruchs 1, bei dem eine solide Beschichtung auf eine Fläche des Bauteils aufgebracht wird, wobei das Bauteil und die solide Beschichtung relativ zueinander bewegt und mittels eines Klebstoffs im Bereich einer Andruckzone miteinander verbunden werden. Der Klebstoff und/oder die solide Beschichtung und/oder das Bauteil werden im Bereich einer Wirkzone durch Bestrahlen mit mindestens einem Laserstrahl aktiviert oder reaktiviert, und anschließend wird die solide Beschichtung mittels eines Andruckelements mit dem Bauteil verbunden.

Im Stand der Technik werden beispielsweise mehrere Laser mit Mischpolarisation eingesetzt, deren Laserstrahlen anschließend zusammengeführt und auf das zu aktivierende Haftmittel ausgerichtet werden. Bekannt sind auch Systeme, bei denen die Laserstrahlen über Glasfaserkabel geleitet werden.

Hierbei hat es sich als nachteilig erwiesen, dass teilweise eine verstärkte Reflexion des Laserstrahls beim Einkoppeln der Strahlung in das zu aktivierende Haftmittel erfolgt.

Aus dem Dokument der DE 38 27 297 A1 ist es bekannt, einen Steg auf eine gebogene Platte aufzubringen, wobei die zum Laserschweißen verwendete Laserstrahlung überwiegend senkrecht zu einer Spaltebene polarisiert ist.

Ferner ist die DE 10 2006 056 010 A1 bekannt. Zur Stabilisierung einer soliden Beschichtung auf einem Bauteil sind neben einer Andruckrolle ggf. Nachpresselemente zum Aufbringen von Druck auf die solide Beschichtung vorgesehen.

### Gegenatand der Erfindung

Es ist ein Ziel der vorliegenden Erfindung, eine Aktivierungseinrichtung für eine Beschichtungsvorrichtung bereitzustellen, mit der ein höherer Wirkungsgrad bei der Aktivierung des Haftmittels, und eine Reduzierung der unter Umständen gefährlichen, zumindest jedoch die Effizienz reduzierenden Streustrahlung erreicht wird.

Die erfindungsgemäße Aufgabe wird durch eine Vorrichtung nach Anspruch 1 gelöst. Weitere bevorzugte Ausführungsformen sind den abhängigen Ansprüchen zu entnehmen.

Kern der Erfindung ist die Verwendung eines Lasers, mit dem ein polarisierter Laserstrahl derart emittiert werden kann, dass in einer Bezugsebene zum Haftmittel im Wesentlichen ein Laserstrahl mit p-Polarisation vorliegt. P-Polarisation bedeutet in diesem Zusammenhang "parallele Polarisation" in Bezug auf eine Bezugsebene, die auf der durch das Beschichtungsmaterial oder das Werkstück ausgebildeten Fläche im Wesentlichen senkrecht steht, und durch ein Lot auf dieser Fläche und dem Laserstrahl aufgespannt wird. S-Polarisation bedeutet "senkrechte Polarisation" in Bezug auf die Bezugsebene.

Beschichtungsmaterial meint im Sinne dieser Anmeldung ein Element, das auf einem Werkstück aufgebracht wird. Dieses kann aus einem Material, oder aus mehreren Schichten bestehen. Beispielsweise wird als oberste Schicht ein zu aktivierendes Haftmittel aufgebracht. Andernfalls ist es möglich, ein eine Kunststoffschicht aufweisendes Material durch den Laserstrahl zu aktivieren. Demnach bedeutet "auf einem Beschichtungsmaterial" in Bezug auf das Haftmittel im Sinne dieser Anmeldung sowohl eine Haftmittelschicht auf dem Beschichtungsmaterial oder an diesem, oder auch Haftmittel im Beschichtungsmaterial. In diesem Fall ist das Haftmittel im Beschichtungsmaterial integriert, oder das Beschichtungsmaterial kann alternativ selbst haftende Eigenschaften entfalten. Ferner ist koextrudiertes Material zu nennen.

Das Filtern eines multipolaren Laserlichts, was zu einer Reduzierung der ursprünglich generierten Laserleistung führt, ist dabei nicht unbedingt erforderlich. Allerdings könnte der Laserstrahl auch zusätzlich gefiltert werden.

Gemäß der vorliegenden Erfindung wird eine Vorrichtung zur Aktivierung eines Haftmittels bereitgestellt, welche Vorrichtung die Merkmale des Anspruchs 1 aufweist.

Der vom Laserstrahlemitter emittierte Laserstrahl ist dabei derart ausgerichtet, dass er auf das Haftmittel auftreffen kann und dieses aktiviert. Im aktivierten Zustand kann das Haftmittel eine dauerhafte Verbindung zwischen Werkstück und Beschichtungsmaterial bereitstellen.

Im Zuge der durchgeführten Versuche hat sich gezeigt, dass die Einkopplung eines Laserstrahls mit p-Polarisation in ein Haftmittel zu einer deutliche Verringerung der am Haftmittel reflektierten Strahlung führt. Somit ist es möglich, unter Beibehaltung der zur Aktivierung erforderlichen Aktivierungsenergie einen Laser mit geringerer Intensität einzusetzen und somit eine Energieeinsparung durch verminderte Leistung gegenüber bekannten Systemen zu erreichen. Ferner können eine höhere Prozessstabilität sowie eine geringere Anfälligkeit gegenüber Ausbau-/ Montagetoleranzen realisiert werden.

Bevorzugt ist es vorgesehen, dass mehr als 75 % p-polarisiertes Licht in der genannten Bezugsebene vorliegt, bzw. dass weitestgehend ausschließlich p-polarisiertes Licht in der Bezugsebene vorliegt. Gegenüber Laserlicht mit Mischpolarisation bzw. Licht mit s-Polarisation zeichnet sich das p-polarisierte Licht dadurch aus, dass die in das Haftmittel umgesetzte Laserleistung höhere Werte annimmt.

Bei einer bevorzugten Ausführungsform ist es vorgesehen, dass zur Ablenkung des Laserstrahls ein Ablenkspiegel oder Prisma verwendet wird. Diese Maßnahmen zeichnen sich gegenüber Faserleitern dadurch aus, dass die vom Laser ausgegebene Polarisation beibehalten wird. Folglich kann das Laserlicht ohne zusätzlichen Filter in das zu aktivierende Haftmittel eingekoppelt werden. Eine zusätzliche Filterung von Lichtanteilen, die trotz der genannten Maßnahmen s-polarisiertes Licht aufweisen, könnte jedoch dennoch vorgesehen sein. Besonders bevorzugt ist es dabei vorgesehen, dass das Licht des Laserstrahls Direktstrahlung ist. Der Laserstrahl wird derart auf das Beschichtungsmaterial oder auf das Werkstück ausgerichtet, dass der Laserstrahl mit der Ebene des Beschichtungsmaterials bzw. der Ebene des Werkstücks einen Winkel von 20-30 Grad, und bevorzugt 20-27 Grad ausbildet. In den genannten Winkelbereichen ergibt sich ein Optimum aus dem Einfallswinkel des Laserstrahls und der optischen Eindringtiefe in das zu aktivierende Haftmittel. Ferner wird in diesem Bereich die Reflexion des Lichts des Laserstrahls minimiert. In Kombination mit der anspruchsgemäßen Polarisation des Lichts des Laserstrahls ergibt sich somit eine hohe Effizient.

In einer bevorzugten Ausführungsform gibt der Laser einen Laserstrahl mit nur einer bestimmten Polarisation aus. Hierbei kann es sich um einen Diodenlaser, Faserlaser, Festkörperlaser oder CO2-Laser handeln.

Ferner kann die vorliegende Erfindung neben einer Vorrichtung auch auf ein Verfahren zur Aktivierung eines Haftmittels gerichtet sein.

### Kurze Beschreibung der Zeichnungen

- Figur 1: ist eine schematische Draufsicht, die einen Abschnitt einer Beschichtungsvorrichtung zeigt.
- Figur 2: ist eine schematische perspektivische Ansicht zur Erläuterung des Einfallswinkels des Laserstrahls auf ein Kantenband.
- Figur 3: ist eine Ansicht, mit der die Polarisationsrichtung des Laserlichts erläutert wird.

### Detaillierte Beschreibung der bevorzugten Ausführungsformen

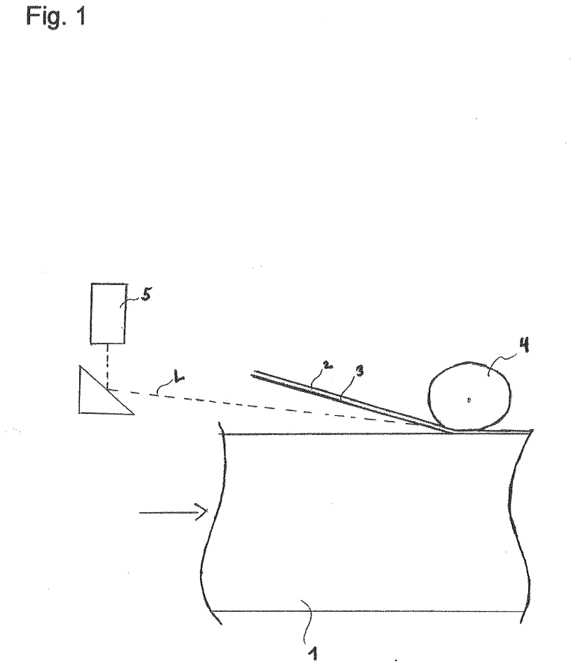

Fig. 1 zeigt eine schematische Ansicht einer bevorzugten Ausführungsform der vorliegenden Erfindung. Hierbei sind die dargestellten Elemente stark vereinfacht, um den Kern der vorliegenden Erfindung deutlicher darstellen zu können.

Insbesondere wird ein Werkstücks 1 dargestellt, das sich in einer Durchlaufrichtung durch die Beschichtungsvorrichtung bewegt (siehe Pfeil in Fig. 1). Auf das Werkstück 1 wird mittels einer Andrückrolle 4 ein Beschichtungsmaterial 2 aufgedrückt, wobei das Beschichtungsmaterial 2 an der zum Werkstück 1 weisenden Seite mit einem Haftmittel versehen ist.

Ferner ist ein in der vorliegenden Ausführungsform ein Diodenlaser 5 vorgesehen, der einen Laserstrahl L emittiert, und über einen schematisch dargestellten Spiegel oder ein Prisma 6 in den Bereich der Wirkzone umlenkt. Alternativ sind auch Faserlaser oder CO2-Laser für diesen Einsatz geeignet. Dabei ist es bevorzugt vorgesehen, dass der Laserstrahl L in einem Winkel α von 20-30° bezogen auf die Ebene des Beschichtungsmaterials auf dieses auftrifft. Dieser bevorzugte Winkel ergibt sich aus den Brechzahlen von Luft (ca. 1) und dem für Kunststoff, wie dem Haftmittels, typischen Wert von 1,5.

Erfindungsgemäß ist es vorgesehen, dass der Laser 5 derart ausgerichtet wird, dass in der Bezugsebene des Haftmittels 3 überwiegend P-Polarisation vorliegt. Die Bewertung, dass "überwiegend" Laserlicht mit P-Polarisation vorliegt, richtet sich danach, dass ein Diodenlaser eingesetzt wird, der eine bestimmte Polarisation aufweist. Diese dem Diodenlaser eigene Polarisation geht deshalb nichtverloren, weil zur Umlenkung des Laserlichts bis zum Haftmittel Spiegel und Prismen verwendet werden. Würde alternativ ein Glasfaserkabel verwendet, ginge die vom Diodenlaser emittierte Polarisation des Laserlichts durch Brechung/Streuung verloren. Allerdings kann es sein, dass trotz des genannten Vorgehens eine gewisse Brechung/Streuung oder Polarisationsverschiebung des Laserlichts nicht vermieden werden kann.

Die Umsetzung der Laserleistung in Wärmeenergie hängt neben dem Einfallswinkel der Laserstrahlung auch von der optischen Eindringtiefe in das zu aktivierende Haftmittel ab. Um eine schnelle und zugleich gleichmäßig Aktivierung zu erreichen, hat es sich gezeigt, dass als optimale Eindringtiefe ca. 0,4 mm zu wählen ist.

Da der Laserstrahl derart ausgerichtet ist, dass in der Bezugsebene im Wesentlichen P-Polarisation vorherrscht, und der Weg des Laserstrahls durch das Haftmittels durch die Wahl des Einfallwinkels maximiert wird, kann eine optimale Einkopplung der Energie des Laserstrahls in das Haftmittel zu dessen Aktivierung genutzt werden.

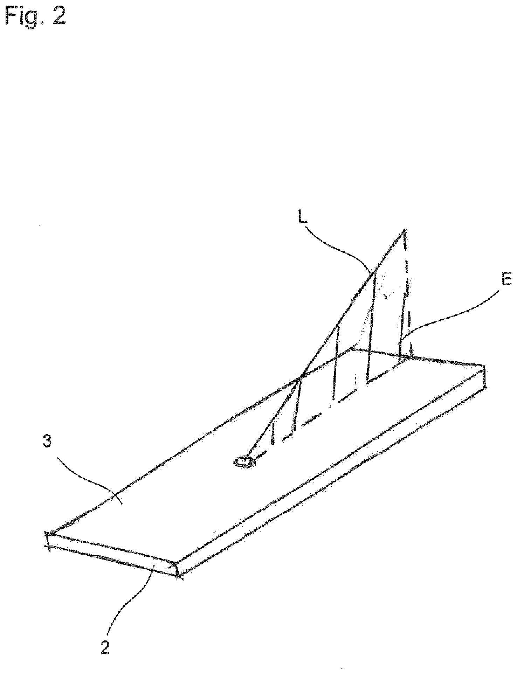

In Figur 2 ist schematisch ein Beschichtungsmaterial 2 gezeigt, auf dem ein zu aktivierendes Haftmittel 3 aufgebracht ist. Ferner ist ein Laserstrahls L abgebildet, der mit einem Lot auf der Ebene des Beschichtungsmaterials eine Bezugsebene E ausbildet.

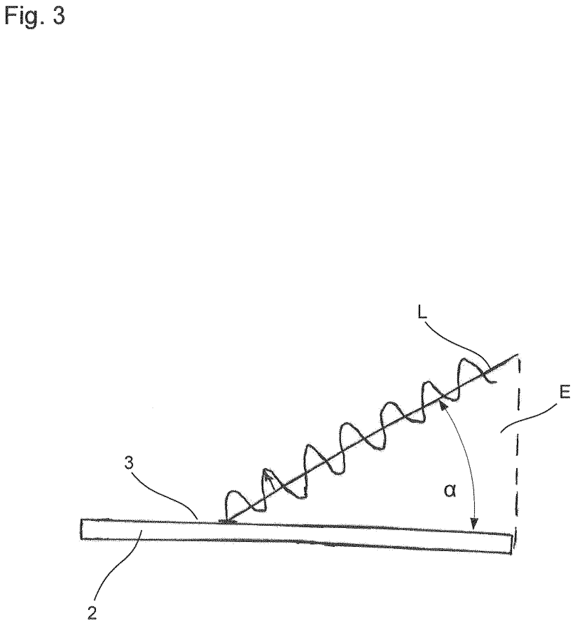

In Figur 3 wird in einer schematischen Seitenansicht die bevorzugte Polarisation des Laserlichts anschaulich erläutert: die Amplitude des Laserlichtstrahls L schwingt dabei in der zuvor definierten Bezugsebene, und trifft im Einfallswinkel α auf das Beschichtungsmaterial 2 auf.

Bei den im Rahmen dieser Erfindung durchgeführten Versuchen hat sich gezeigt, dass die maximal umgesetzte Leistung des Lasers bei der hier bevorzugten p-Polarisation des Laserlichts bei etwa 20-30° maximal ist. In diesem Winkelbereich findet zum einen eine geringe Streuung des Laserlichts am Haftmittel statt. Zum anderen wird eine gleichmäßig Durchwärmung des Haftmittel erreicht.

Die Kennwerte für Laserlicht mit Mischpolarisation, welche üblicherweise eingesetzt wird, zeigt gegenüber dem Laserlicht mit p-Polarisation eine geringere umgesetzte Laserleistung. Dies gilt insbesondere für den Wickelbereich, in dem eine geringe Streuung des Laserlichts zu erwarten ist.

## Patentansprüche

1. Verfahren zur Aktivierung eines auf einem Kantenband (2) oder auf einem Werkstück (1) befindlichen Haftmittels, unter Verwendung einer Vorrichtung, mit:
einem Laser zur Ausgabe eines Laserstrahls zu einem Laserstrahlemitter, wobei der Laserstrahl derart auf das Kantenband (2) oder auf das Werkstück ausgerichtet ist, dass der Laserstrahl mit einem Lot auf der Fläche des Kantenbands (2) bzw. Werkstücks eine Bezugsebene (E) ausbildet, wobei
die Vorrichtung eine Bewegungseinrichtung zum Bewegen des Kantenbands (2) und eine Andruckrolle (4) aufweist, mit der nach der Aktivierung des Haftmittels das Kantenband an das Werkstück gedrückt wird, **dadurch gekennzeichnet, dass**
der Laserstrahl mehr p-polarisiertes Licht als s-polarisiertes Licht in der Bezugsebene (E) aufweist und
der Laserstrahl mit der Ebene des Kantenbands bzw. der Ebene des Werkstücks einen Winkel (α) von 20-30° ausbildet.

2. Verfahren gemäß Anspruch 1, **dadurch gekennzeichnet, dass** mehr als 75% p-polarisiertes Licht in der Bezugsebene vorliegt.

3. Verfahren gemäß Anspruch 1 oder 2, **dadurch gekennzeichnet, dass** weitestgehend ausschließlich p-polarisiertes Licht in der Bezugsebene vorliegt.

4. Verfahren gemäß einem der vorangegangenen Ansprüche,
**dadurch gekennzeichnet, dass** zur Ablenkung des Laserstrahls ein Ablenkspiegel oder ein Prisma verwendet wird.

5. Verfahren gemäß einem der vorangegangenen Ansprüche,
**dadurch gekennzeichnet, dass** das Licht des Laserstrahls Direktstrahlung ist.

6. Verfahren gemäß Anspruch 1, bei der Laserstrahl derart auf das Kantenband oder auf das Werkstück ausgerichtet ist, dass der Laserstrahl mit der Ebene des Kantenbands bzw. der Ebene des Werkstücks einen Winkel (α) von 20-27° ausbildet.

7. Verfahren gemäß einem der vorangegangenen Ansprüche,
**dadurch gekennzeichnet, dass** der Laser ein Laser ist, der einen Laserstrahl mit nur einer bestimmten Polarisation ausgibt, insbesondere Diodenlaser, Faserlaser, CO2-Laser oder Festkörperlaser.

8. Verfahren gemäß einem der vorangegangenen Ansprüche,
**dadurch gekennzeichnet, dass** ferner eine Bewegungseinrichtung für das Werkstück vorgesehen ist.

## Claims

1. A method for activating an adhesive agent located on an edge band (2) or on a workpiece (1) using a device comprising:
a laser for outputting a laser beam to a laser beam emitter, the laser beam being aligned to the edge band (2) or to the workpiece such that the laser beam forms a reference plane (E) perpendicular to the surface of the edge band (2) or the workpiece,
the device having a movement device for moving the edge band (2) and a pressure roller (4) by means of which the edge band is pressed onto the workpiece after activating the adhesive agent,
**characterised in that** the laser beam has more p-polarized light than s-polarized light in the reference plane (E) and the laser beam forms an angle (α) of 20-30° with the plane of the edge band or the plane of the workpiece.

2. The method according to Claim 1, **characterised in that** more than 75% p-polarized light is present in the reference plane.

3. The method according to Claim 1 or 2, **characterised in that** as far as possible exclusively p-polarized light is present in the reference plane.

4. The method according to any of the preceding claims, **characterised in that** a deflection mirror or a prism is used to deflect the laser beam.

5. The method according to any of the preceding claims, **characterised in that** the light of the laser beam is direct radiation.

6. The method according to Claim 1, wherein the laser beam is aligned to the edge band or to the workpiece such that the laser beam forms an angle (α) of 20-27° with the plane of the edge band or the plane of the workpiece.

7. The method according to any of the preceding claims, **characterised in that** the laser is a laser which emits a laser beam with only a particular polarization, in particular a diode laser, a fibre laser, a CO2 laser or a solid state laser.

8. The method according to any of the preceding claims, **characterised in that** a movement device for the workpiece is also provided.

## Revendications

1. Procédé d'activation d'un adhésif se trouvant sur une bande de chant (2) ou sur une pièce (1), en utilisant un dispositif, comprenant :
un laser pour délivrer un rayon laser à un émetteur de rayon laser, dans lequel le rayon laser est dirigé sur la bande de chant (2) ou sur la pièce de sorte que le rayon laser forme avec une verticale sur la surface de la bande de chant (2) ou la pièce un plan de référence (E), dans lequel le dispositif présente un dispositif de déplacement pour déplacer la bande de chant (2) et un rouleau presseur (4) avec lequel, après l'activation de l'adhésif, la bande de chant est pressée sur la pièce,
**caractérisé en ce que** le rayon laser présente plus de lumière p-polarisée que de lumière s-polarisée dans le plan de référence (E) et le rayon laser forme avec le plan de la bande de chant ou le plan de la pièce un angle (α) de 20 à 30°.

2. Procédé selon la revendication 1, **caractérisé en ce qu'**il y a plus de 75 % de lumière p-polarisée dans le plan de référence.

3. Procédé selon la revendication 1 ou 2, **caractérisé en ce qu'**il y a très largement exclusivement de la lumière p-polarisée dans le plan de référence.

4. Procédé selon l'une quelconque des revendications précédentes, **caractérisé en ce que**, pour dévier le rayon laser, un miroir de déviation ou un prisme est utilisé.

5. Procédé selon l'une quelconque des revendications précédentes, **caractérisé en ce que** la lumière du rayon laser est un rayonnement direct.

6. Procédé selon la revendication 1, dans lequel le rayon laser est dirigé sur la bande de chant ou sur la pièce de sorte que le rayon laser forme avec le plan de la bande de chant ou le plan de la pièce un angle (α) de 20 à 27°.

7. Procédé selon l'une quelconque des revendications précédentes, **caractérisé en ce que** le laser est un laser qui délivre un rayon laser avec seulement une polarisation déterminée, en particulier un laser à diode, un laser à fibre, un laser à CO2 ou un laser à solide.

8. Procédé selon l'une quelconque des revendications précédentes, **caractérisé en ce qu'**il est prévu en outre un dispositif de déplacement pour la pièce.
